# EUROPEAN PATENT APPLICATION

(11) **EP 1 003 028 A1**
(43) Date of publication of application: **24.05.2000**
(21) Application number: 99122632.5
(22) Date of filing: 13.11.1999
(51) Int. Cl.: G01N 21/85

(54) **Apparatus for measuring light penetrability of liquids**

(30) Priority: 20.11.1998 CN 98248540 U
(71) Applicant: Kuan, Ching Fu, San Hsia, Taipei Hsien (TW)
(72) Inventor: Kuan, Ching Fu, San Hsia, Taipei Hsien (TW)
(74) Representative: Helms, Joachim, Dipl.-Ing. Patentanwalt

(57) **Abstract**

An instrument for measuring light penetrability of a liquid is composed of a casing (5), a light source (1), a detector (4), a guide bar (2), and a reverse bar (3). The casing consisting of an upper casing part (51) and a lower casing part (52). The light source and the detector are received in the upper casing part and spaced by double partitions (53) and, the guide bar and the reverse bar are received in the lower casing part. There are light emitting diodes in the light source to emit lights of different wavelengths independently. The guide bar has an end of oblique reflection plane (21), and the reverse bar has an of oblique reflection plane (31) correspondingly to reflect the light flux toward the detector.

## Description

### BACKGROUND OF THE INVENTION

### 1. Field of The Invention:

The present invention relates to an instrument for light penetration rate in a liquid, particularly to a measuring apparatus, which improves an arrangement of light transmitting way such that an accurate penetration rate of light in a liquid can be obtained easily.

### 2. Description of Related Art:

It is known that lights having fixed wavelengths pass through a liquid to measure a penetration rate of light in the liquid has been adopted for years in industries. For instance, a test article immersed in a dyeing liquid can absorbs colored-stuff in the dyeing liquid such that the dyeing liquid changes the light penetrability thereof. Thus, the dyeing rate in the test article can be kept update by an instrument.

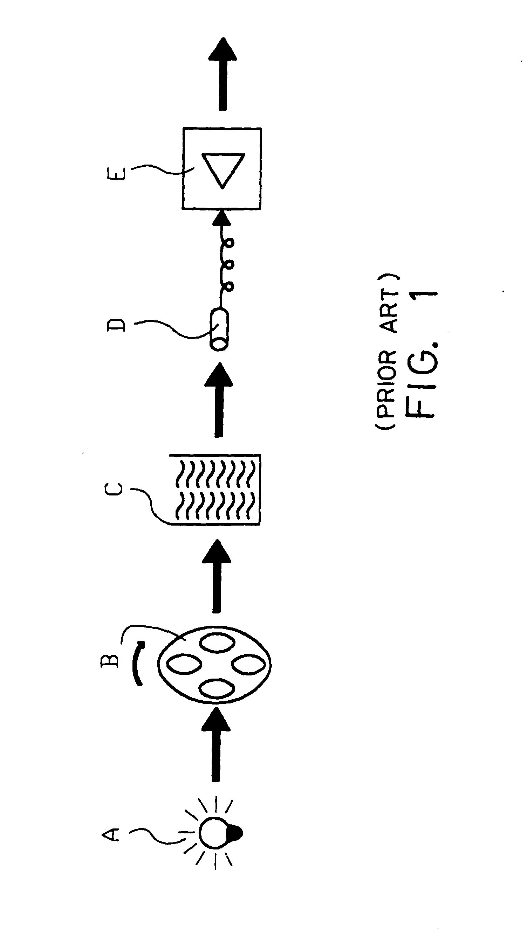

As shown in Fig.1, a conventional instrument for measuring the penetration rate usually has a light source A of tungsten lamp, halogen lamp, or xenon arc lamp. A color filter lens assembly B disposed in front of the light source A picks up color lights of major wavelengths such as red zone of 660nm, yellow zone of 590nm, green zone of 560nm, and blue zone of 430nm. Then, the color lights are directed to pass through a colorless container C filled with a test liquid, i.e. dyeing solution. Finally, a detector D converts the lights into an electrical signal E so that a specific penetration rate can be read out as a reference data at dyeing work.

But, the conventional apparatus reveals that the light source is apt to decay such that it is unable to keep a constant light intensity, and great electricity consumption is needed such that a high heat generation is unavoidable. In addition, the color lens is easily decayed and not resistant against moisture such that it is hard to be maintained in good condition. Furthermore, when a sample liquid is required to pick up from a manufacturing process of high temperature and high pressure during in operation, a complicated pipeline has to be set up dangerously.

The present inventor has filed an U.S. patent application entitled "IMMERSIBLE APPARATUS FOR MEASURING LIGHT PENETRABILITY OF LIQUIDS" on December 12, 1996 and the application has been granted on December 9, 1997 as U.S. Patent No. 5,696,592. As illustrated in Figs. 2 and 3, the inventor discloses two preferred embodiments in the patent to overcome aforesaid defects existing in the conventional measurement device. Nevertheless, the present invention improves U.S. Patent No. 5,696,592 and provides a measuring device, which is much more suitable for finding out a correct measured value.

### SUMMARY OF THE INVENTION

The object of the present invention is to provide an instrument for penetration rate in a liquid in which the multi-wavelengths in the light can be controlled independently.

Another object of the present invention is to provide an instrument for light penetration rate in a liquid in which a light flux can be directed accurately toward the detector.

A further object of the present invention is to provide an instrument for light penetration rate in a liquid with which an operator can measure a desired data with regard to the light penetration rate in a liquid handily and correctly.

### BRIEF DESCRIPTION OF THE DRAWINGS

The present invention can be more fully understood by referring to the following description and accompanying drawings, in which:
Fig. 1 is a schematic diagram of a conventional apparatus for measuring penetration rate of light in a fluid;

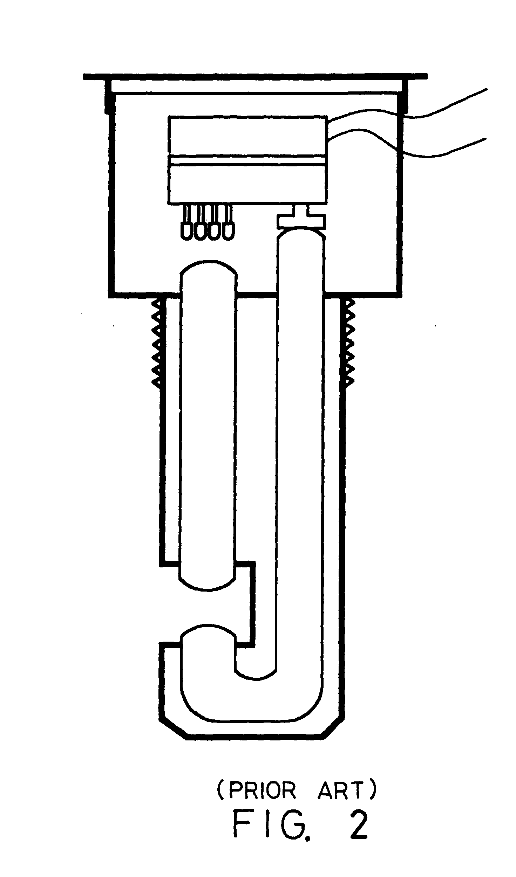

Fig. 2 is a plan view of an apparatus for measuring light penetrability of liquids in an embodiment disclosed in U.S. Patent No. 5,696,592;

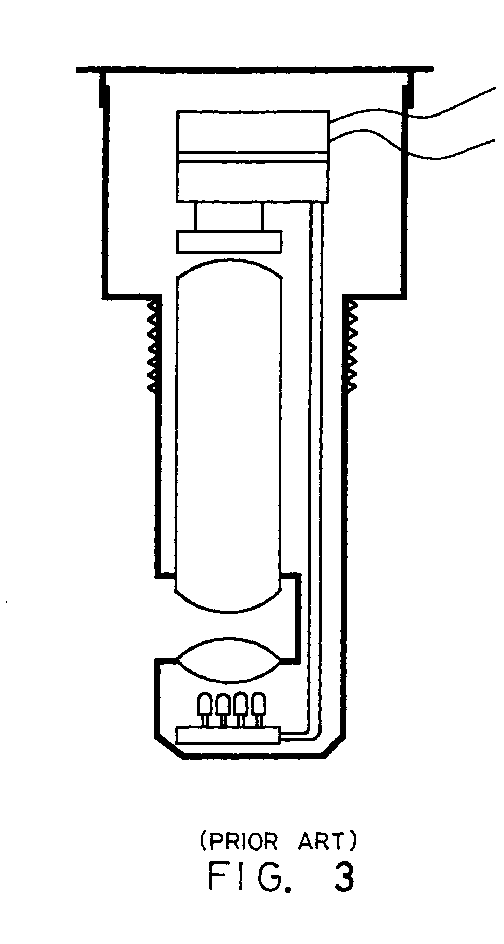

Fig. 3 is a plan view of an apparatus for measuring light penetrability of liquids in another embodiment disclosed in U.S. Patent No. 5,696,592;
Fig. 4 is a sectional view of an instrument for light penetration rate in a fluid according to the present invention; and
Fig. 5 is a diagrammatic view illustrating the process of light penetration rate measurement according to the present invention.

### DETAILED DESCRIPTION OF THE PREFERRED EMBODIMENT

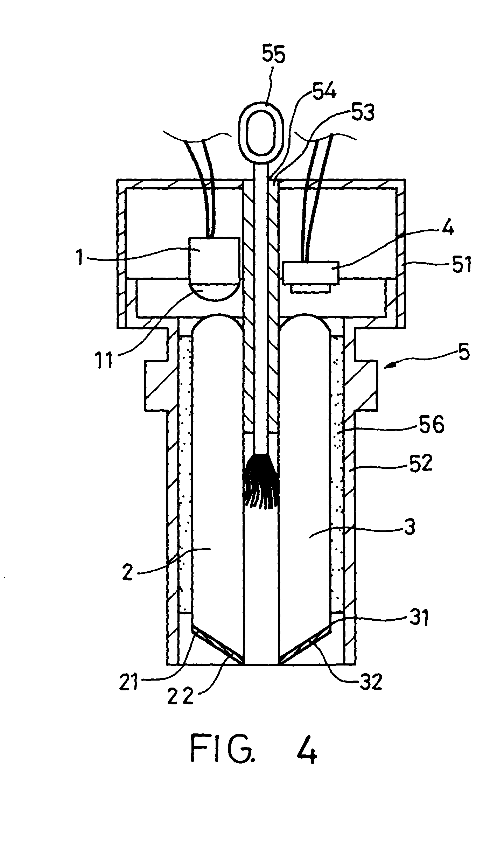

Referring to Fig. 4, basically, an instrument for light penetration rate in a fluid of the present invention comprises a light source **1**, a guide bar **2**, a reverse bar **3**, a detector **4**, and a casing **5**.

The light source 1 consists of a plurality of light emitting diodes (LEDs) and each LED connects a switch respectively. The switches may be mounted on the outer surface of the casing **5** so that the LEDs can be turned on or turned off via controlling the switches. Each LED can be switched on to emit a light of specific wavelength respectively and the lights emitted can be gathered as a light flux by a convex lens **11** located at an outlet of the light source **1**.

The guide bar **2** is an elongated body with light penetration and preferably has a square shape of cross section. The guide bar **2** is attached an oblique reflection plane **21** at the lower end thereof and an incline of 45 degrees for the refection plane is preferred. An evaporation reflection layer **22** is adhered on the outer surface of the reflection plane **21** to reinforce the reflection function.

The reverse bar **3** is an elongated body with light penetration either. The reverse bar **3** is attached an oblique reflection plane **31** corresponding to the reflection plane **21**. A reflection layer **32** is adhered on the outer surface of the reflection plane **31** corresponding to the reflection layer **22**. It is preferred that an incline of 45 degrees is provided for the reflection plane **31** such that the reflection plane **21** and reflection plane **31** are disposed oppositely with each other.

The detector **4** receives and senses the light transmitted via the reverse bar **3** so that a magnified circuit and other interfaces are connected with the detector **4** to convert the light received therein into readable electrical signals.

The casing **5** consists of an upper casing part **51** and a lower casing part **52**. The light source **1** and the detector **4** are mounted in the upper casing part **51** and it is preferable that the light source **1** and the detector **4** are placed separately with each other. Therefore, double light resistant partitions **53** are provided between the light source **1** and the detector **4** and a gap **54** is formed between the double partitions **53**. A cleaning stick **55** with brushes at a tail end thereof is inserted in the gap **54** and can be moved up and down for cleaning job. The light source **1** and the detector **4** can be attached to a respective nearby partition **53**.

The lower casing pan **52** can be fastened to the upper casing part **51** by conventional screw threads. The size of the casing **5** has to adapt to the sizes of the guide bar **2** and the reverse bar **3**. A protection pad **56** can be provided on the inner wall of the casing **5** such that the guide bar **2** and the reverse bar **3** are sandwiched by the protection pad **56** and the partitions **53** respectively. The space under the partitions **53** and between the guide bar **2** and reverse bar **3** constitutes a pass path for the light. A device engaging with the liquid measured container can be arranged in the lower casing part **52**.

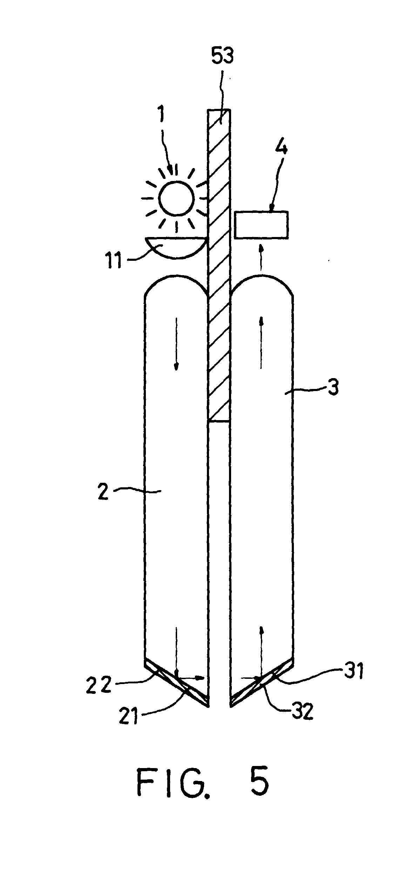

Please refer to Figs. 4 and 5 again. The operation of the instrument for light penetration rate in a fluid according to the present invention will be explained hereinafter. First of all, insert the lower casing part **52** into a test liquid and then turn on the light source **1**. The lights from the light source **1** may pass through the convex lens **11** to form a light flux, and the light flux is directed through the guide bar **2** along the direction of arrows shown in Fig. 5. The light flux meets the reflection plane **21**, and then is reflected to the reflection plane **31**. The reflection plane **31** further transmits the light flux to the detector **4**. The light waves received by the detector **4** can be treated as a readable data for comparison afterwards. The guide bar **2** and the reverse bar **3** can be cleaned by the cleaning stick **55** in case of being stained or unclear such that a measured value can be obtained accurately.

While the invention has been described with reference to preferred embodiment thereof, it is to be understood that modifications or variations may be easily made without departing from the spirit of this invention, which is defined by the appended claims.

## Claims

1. An instrument for light penetration rate in a Liquid, comprising:
a casing consisting of an upper casing part and a lower casing part, said upper casing part being divided by double partitions located at a middle section thereof;
a light source, disposed in said upper casing part at one of the partitions, consisting of a plurality of light emitting diodes, each of said light emitting diodes providing a unique wavelength and being controlled to turn on and turn off independently;
a detector, disposed in said upper casing part at the other one of the partitions,
a guide bar with two ends, being an elongated body made of light penetration material, an end thereof being an oblique reflection plane, and the other end thereof facing said light source; and
a reverse bar with two ends, being an elongated body made of light penetration material, being disposed opposite to said guide bar in said casing, an end thereof being an oblique reflection plane, and the other end thereof facing said detector.

2. An instrument for penetration rate in a liquid according to claim 1, wherein a convex lens is attached to said light source.

3. An instrument for penetration rate in a liquid according to claim 1, wherein a layer of protection pad is provided in the lower casing part and the guide bar and the reverse bar are sandwiched by said layer of protection pad and the partitions respectively.

4. An instrument for penetration rate in a liquid according to claim 1, wherein a reflection layer is adhered on the reflection plane of the guide bar.

5. An instrument for penetration rate in a liquid according to claim 1, wherein a reflection layer is adhered on the reflection plane of the reverse bar.

6. An instrument for penetration rate in a liquid according to claim 1, wherein an incline of 45 degrees for both the reflection planes is preferred.
